# EUROPEAN PATENT APPLICATION

(11) **EP 1 914 673 A1**
(43) Date of publication of application: **23.04.2008**
(21) Application number: 06123577.6
(22) Date of filing: 07.11.2006
(51) Int. Cl.: G06Q 10/00, G06Q 30/00

(54) **Method of evaluating contact center performance**

(30) Priority: 17.10.2006 US 582272
(71) Applicant: Rockwell Electronic Commerce Technologies, L.L.C., Lombard, IL 60148 (US)
(72) Inventor: Mueller, Margaret, Chicago, IL 60613-3579 (US); Harmey, Marna, Chicago, IL 60622-4573 (US); Rice, Kenneth A., Naperville, IL 60540-8206 (US); Shapiro, Owen, Glencoe, IL 60022-1326 (US); Sheridan, Michael, Chicago, IL 60605-2266 (US); Cairns, Laurie, Park Ridge, IL 60068-3422 (US)
(74) Representative: Mittler, Enrico

(57) **Abstract**

A method and apparatus are provided for objectively grading a performance of a contact center based upon input from a plurality of customers of the contact center. The method includes the steps of receiving a consumer importance rating and a consumer satisfaction rating on the performance of the contact center from a multiplicity of customers of the plurality of customers of the contact center for each entry within a set of categories including empathy and advocacy, efficiency and automation, determining a maximum point score for each entry of the set of categories based upon a relative value of the importance ratings provided by the plurality of customers and assigning a point score to each entry of the set of categories based upon the maximum point score for the entry and the satisfaction ratings of the plurality of customers for the category.

## Description

### Field of the Invention

The field of the invention relates to contact centers and more particularly to the effectiveness of contact centers in meeting customer expectations.

### Background of the Invention

Customer contact is the key to organizational success or failure. If the customer comes away from a contact with an organization with a positive impression, then that customer will probably continue to do business with the organization. If the customer feels frustrated or unsatisfied with a particular contact outcome, then that customer is more likely to consider doing business with a different organization.

In order to automate the process of customer contact, most organizations use contact centers. Contact centers provide a single contact point where contacts with many customers may be distributed to many agents for disposition of customer inquiries and concerns.

Contact centers are usually oriented around a single (or small number of) contact point(s) (e.g., telephone number(s), e-mail address(es), website address(es), etc.). Agents of the organization may sign-on to the contact center and be automatically assigned contacts by the contact center. A controller within the contact center may transfer assigned contacts to a workstation of the assigned agent.

As contacts are processed, a controller within the contact center may identify the customer based upon information associated with the contact channel (e.g., ANI for telephone, an e-mail address for Internet, URL or URI, etc.). Once identified, calls delivered to agents may be delivered along with customer records to a terminal of the agent at the time of contact delivery.

While contact centers work relatively well in automating contact processing, the impression provided to the customer may not always be positive. When agents are busy, an automated attendant (autoattendant) may provide options that do not meet the needs of the customer. Where a customer is assigned to an agent, the agent may not be trained to address the customer's concerns and may transfer the customer to another agent. If the other agent is busy, then the customer may wait at the end of a dead line. Where the customer is dissatisfied or frustrated by the experience, the customer may simply give up and take his business to another organization. Accordingly, a need exists for a method and apparatus for measuring customer satisfaction regarding the effectiveness of the contact center environment.

### Summary

A method and apparatus are provided for objectively grading a performance of a contact center based upon input from a plurality of customers of the contact center. The method includes the steps of receiving a consumer importance rating and a consumer satisfaction rating on the performance of the contact center from each customer of the plurality of customers of the contact center for each entry within a set of categories including empathy and advocacy, efficiency and automation, determining a maximum point score for each entry of the set of categories based upon a relative value of the importance ratings provided by the plurality of customers and assigning a point score to each entry of the set of categories based upon the maximum point score for the entry and the satisfaction ratings of the plurality of customers for the category.

### Brief Description of the Drawings

FIG. 1 is a block diagram of a contact center evaluation system in accordance with an illustrated embodiment of the invention;
FIG. 2 shows the contact center evaluation system in a context of use;
FIGs. 3-5 show exemplary questions that may be used by the system of FIG. 1; and
FIGs. 6-8 show survey results of customers versus contact center employees.

### Detailed Description of an Illustrated Embodiment

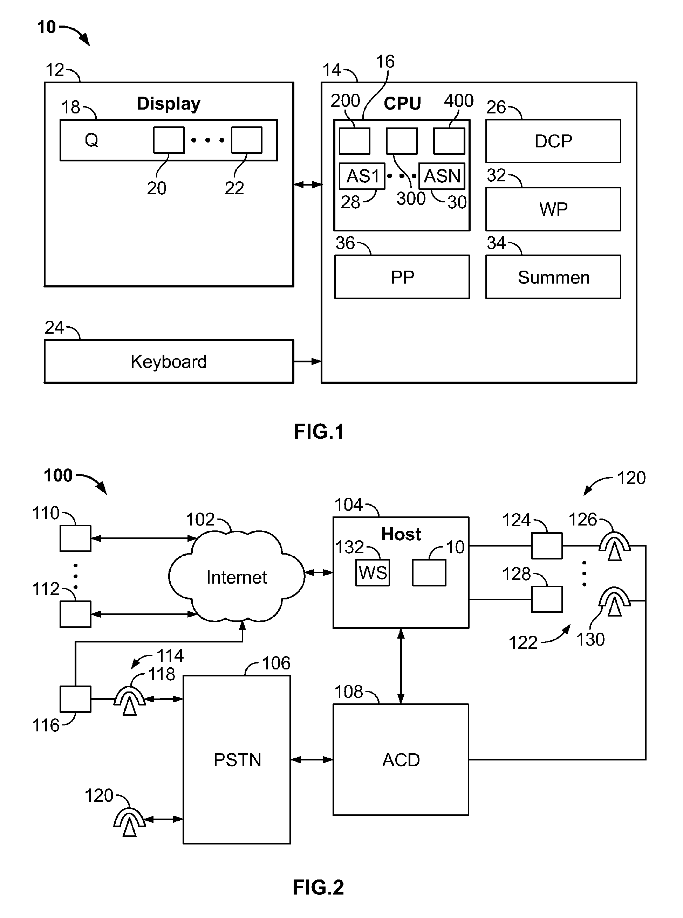

FIG. 1 is a block diagram of a evaluation system 10 for objectively evaluating the performance of a contact center environment, shown generally in accordance with an illustrated embodiment of the invention. Within the contact center environment, the evaluation system 10 functions to measure the overall perception of the organization created in the mind of a customer based upon interaction with an organization through the contact center. Interaction in this case means the interaction of the customer with the hardware of the contact center and also with the agents that service the customer through the contact center.

The interaction with the hardware means the perception created in the mind of the customer based upon operation of the automatic contact handling systems of the contact center in handling the customer's contacts with the organization. Examples may include the degree to which an autoattendent is "user friendly" in presenting options and accepting selections or the degree to which a website allows the customer to access information of the organization in an intuitive and well-organized manner.

The interaction with the agents means the perception of the organization created in the mind of the customer by the interaction of the customer with an agent. Examples of factors that may control the customer's perception of the organization may include the knowledge and courtesy of the agent, the ability of the agent to resolve problems in a single call, and/or the apparent authority or willingness of an agent to resolve concerns.

The system 10 is objective in that it evaluates the performance of the contact center under a criteria based upon a set of key findings related to contact centers. On a first level, it has been found that one in five contact center interactions fail to meet consumer (customer) expectations. In contrast, contact center users and managers over-estimate their performance compared to consumer perceptions.

It has been found that consumers value agent empathy and advocacy more than technology-enabled efficiency and automation. Further, consumers have been found to prefer (crave) human contact over machine contact and the ability to be able to easily access agents of the organization with minimal wait times.

In spite of a preference for human contact, when consumers are exposed to new contact center technologies, their satisfaction rates have been found to be very high. In this regard, it has also been found that most contact center interactions occur via telephone, but a growing proportion of contacts are online, including e-mails and web-based chat sessions.

It has been found that customers of contact centers have a number of factors in common. For example, 59% are female and 55% have children. The mean household income is $56,400, the mean age is 44 years and the customer ' typically has some college education.

Based upon research, the average customer of the organization has been a customer for five years. It has also been found that without feedback to the organization via the system 10, one in five customers will consider leaving the organization and seeking the same goods and services elsewhere.

Analysis has revealed that there are three main factors underlying customer perception of the contact center. By measuring the customer's perceptions under three factors, the performance of the contact center may be objectively measured.

In general, the three factors include people-based concerns (hereinafter referred to as "empathy and advocacy"), time (hereinafter referred to as "efficiency") and automation, While the importance of each of the three factors may vary among customers, it has been found that the three factors are common among virtually all consumers.

For the first factor of empathy and advocacy, customer satisfaction may be primarily driven by the customer's interaction with a person at the contact center. In this case, customer satisfaction may be determined by whether the agent was friendly and courteous. Other factors may include whether the agent was knowledgeable, acted in a professional manner and took responsibility for addressing and resolving the customer's concern. Also important factors are fl.exibility on the part of the agent and a perception that the agent values the customer's business and cares about the customer's problems. Still further, does the agent have authority to solve the customer's problems without transfer to another agent? Is the agent patient? Does the agent understand the customer and the customer's situation? Does the agent speak clearly and is he easy to understand?

Under the second factor of efficiency, satisfaction of the customer is driven primarily by the speed and efficiency of their interaction. Concerns in this area include: an agent answering the call/e-mail/chat quickly; having a human agent respond to the contact instead of an automated system; being able to access an agent easily when dealing with an automated menu; being able to directly speak to a person without a long delay; having a clear voice connection without delays or lags; being able to fully resolve an issue during a single interaction; being able to fully resolve an issue without being transferred; minimizing the amount of time on hold or not being asked to wait.. Other concerns may involve the customer perceiving inconsistent policies and procedures each time the customer contacts the organization.

The third factor of automation is driven primarily by the functionality of the automation and the automation fitting into the customer's high tech daily routine. Concerns in this area include: being able to easily access a person while using an automated menu or being able to easily access a person while using a website of the organization. Other concerns may include the organization providing an effective automated system that allows the customer to get information or resolve issues without dealing with a person and having multiple options for contacting or interacting with the organization.

In general, the system 10 may operate to evaluate the performance of the contact center over a number of different contact channels provided by the contact center. Examples include conventional switched circuit telephone calls through the PSTN, e-mails, chat sessions or voice calls through the Internet using VoIP. The overall evaluation of the performance of the contact center may be an aggregate of the perceptions over each of the different contact channels.

Turning now to the drawings, FIG. 1 shows the operative elements that may be relied upon for evaluating the performance of the contact system. FIG. 2 shows the system 10 in a context of use within a contact system 100.

Included within the contact system 100 may be a host 104 and an automatic call distributor (ACD) 108 coupled to a number of agent stations 120, 122. Each agent station 120, 122 may include a telephone 126, 130 and a terminal 124, 128. The host 104 and ACD 108 may be coupled to customers 110, 112, 114, 120 through the Internet 102 and public switch telephone company (PSTN) 106, respectively. It should be noted that at least some customers (e.g., 114) may be coupled to the contact center 100 through a terminal 116 and Internet 102 or through a conventional telephone 118.

The system 10 may by used to evaluate the system 100 using any of a number of different methods. In some cases, the system 10 may be incorporated into the normal operation of the contact center 100 and collect data on customer satisfaction in a manner that is transparent to operation of the contact center 100. For example, a customer waiting in a call queue may be presented with questions on contact center operation as they wait for an agent 120, 122. The customer may respond by activating a key on a keypad of the customer's telephone to provide ratings on performance. Alternately, the contact center 100 may specifically place calls to customers and ask questions that allow the customer to rate the performance of the contact center.

Under still other methods, visitors to a website 132 of the host 104 may be asked to participate in a survey. The survey may (or may not) first confirm that the visitor is a customer and present the visitor with the questions 200, 300, 400. The visitor may enter answers accordingly.

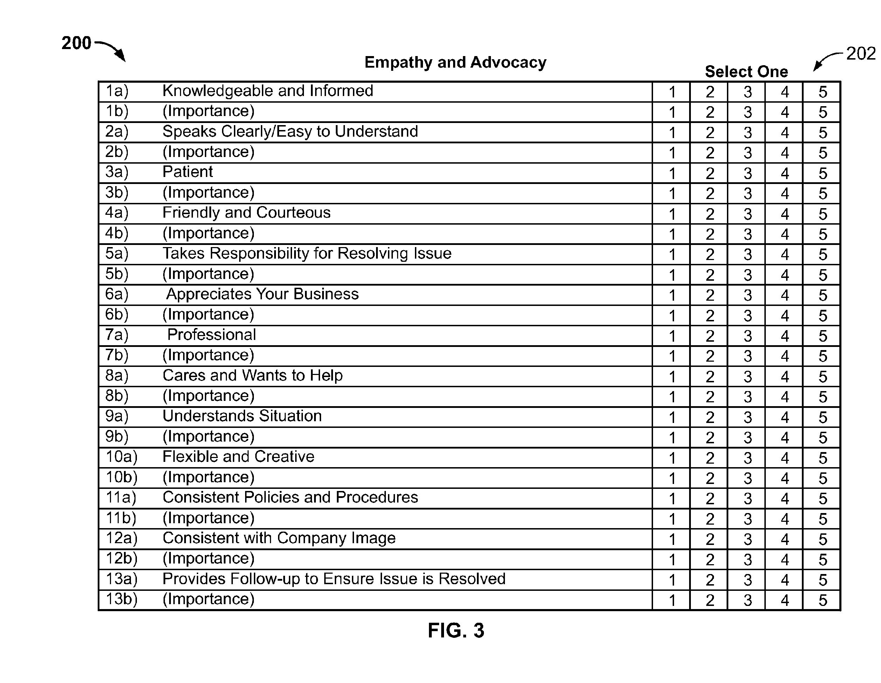

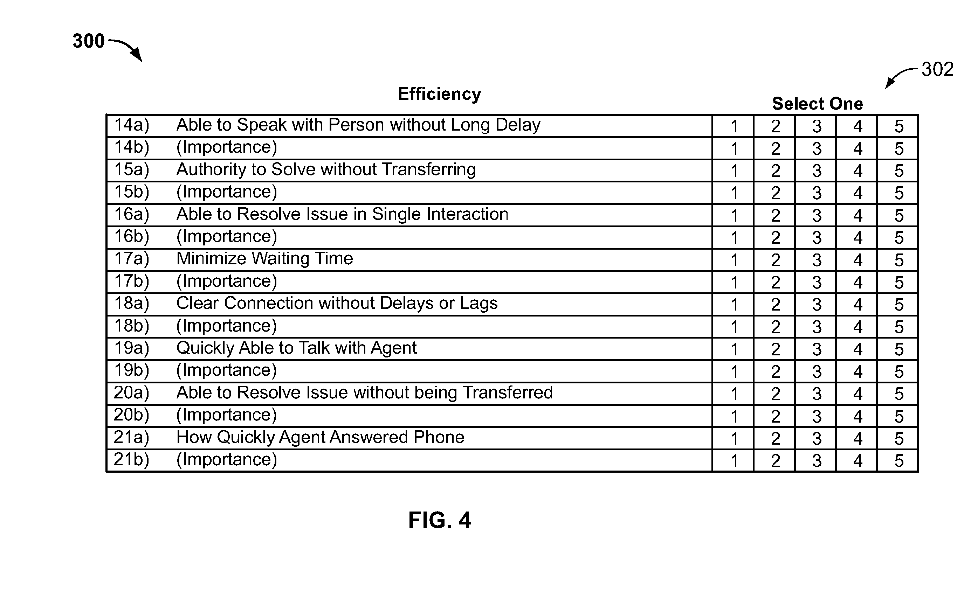

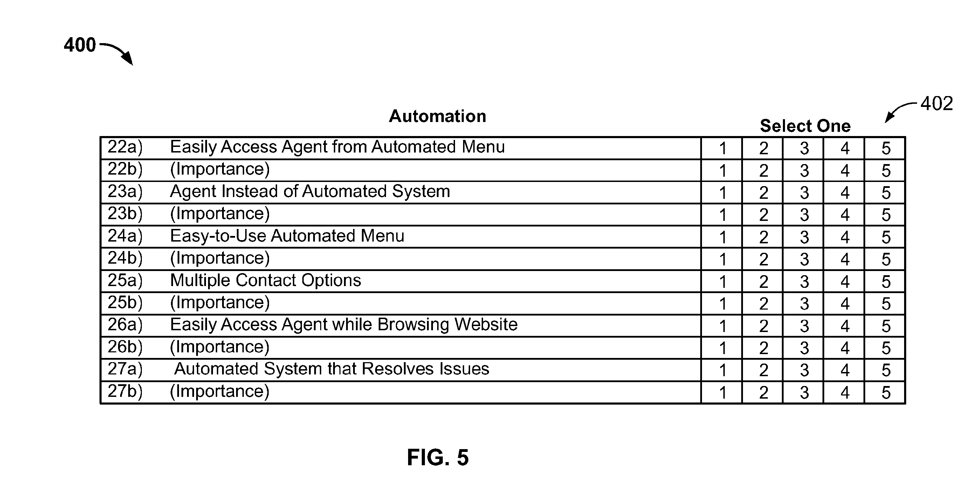

FIGs 3-5 provides an example of a series of 27 questions 200, 300, 400 directed to empathy and advocacy, efficiency and automation. As should be specifically noted, each question is divided into a part "a" and a part "b". The part "a" question has to do with the satisfaction of the customer in the specific categories of empathy and advocacy, efficiency or automation. The part "b" of the question has to do with the importance that a customer places of the question. The customer must answer both the part "a" question and the part "b" question.

As may be noted, opposite each question, a grading scale of from one to five 202, 302, 402 is provided. As a customer evaluates the performance of the contact center 100 in response to each question, the customer may select one of the five grades (with a lowest, least desirable level being a "1" and the highest level being a "5"). Other grading ranges could also be used (e.g., 1-9, 1-10, A-F, etc.) if further granularity is needed.

It should be noted that while a scale of 1-5 may be used, the actual method may involve subtracting 1 from all scores. The subtraction of 1 from all scores is performed for the purely practical reason that since the lowest score is 1, no value should be given for receiving the lowest possible score.

The questions 200, 300, 400 may be selected via a keyboard 24, retrieved from a memory and displayed on a display 12 for the benefit of customers. As each question 200, 300, 400 (reference number 18 in FIG. 1) is presented to the customer, the customer may select one of the grades by causing the activation of a grade selection softkey 20, 22 of the question within the grading range 202, 302, 402.

As a prerequisite to answering the questions 200, 300, 400, the customer would be asked to limit his/her grades to perceptions formed from the last contact with the contact center. The customer would also be asked to identify the contact channel (e.g., telephone, e-mail, chat, etc.).

In the case where a customer (e.g., 1.14) accesses the website 132, the customer 114 may be offered an incentive (e.g., coupons to participate in a survey of the contact center 100). Acceptance of the offer through the keyboard 24 of the customer terminal 116 may cause the questions to appear on the terminal 12 of the agent 116 and the customer 114 may enter answers accordingly.

In the case where the contact center 100 places telephone calls to customers (to directly poll customers for information on contact center performance), the questions 200, 300, 400 may appear on a display 124, 128 of an agent 120, 130 with the grading scale 202, 302, 402 provided on the display 124, 128 as a set of softkeys 18, 20. The agent 120, 122 may read the questions to the customer and ask the customer for a rating on the appropriate scale. The customer may answer (e.g., with a rating of "4") and the agent may activate the appropriate softkey 18, 20 to enter the response.

Under still another illustrated embodiment, the questions 200, 300, 400 may be provided in the form of a questionnaire that is mailed to customers 110, 112, 114, 120. The customers may fill out the questionnaire and return to the organization where an agent or other employee of the organization may enter the answers into a CPU 14.

Within the CPU 14, a data collection processor 26 may monitor the softkeys 18, 20 for answers to each question 18 of the questions 200, 300, 400. As answers to questions 200, 300, 400 are received from a customer 110, 112, 114, 120, the data processor 26 may first open and then save answers within an answer set file 28, 30 provided for each customer within memory 16 along with an identify of the type of contact channel.

While the data collection processor 26 may collect answers within an answer set file 28, 30, there is no requirement that a customer answer every question within the questionnaire. In addition, there is also no requirement that all or even a significant portion of the organization's customers answer the questionnaire in order for the evaluation to have value.

On the other hand, the organization may choose to target at least some customers within specific high-value market segments of the organization's base of customers. However, even in this case, it is not necessary that a significant portion of the targeted group provide complete answer sets.

In order to accommodate incomplete answer sets, each question may be handled (processed) separately. The advantage of processing each question separately is that where a question is not answered or the answer is illegible, the remaining answers can be used without effecting the reliability of the overall score.

Once a sufficient number of answer sets 28, 30 have been collected, a weighting processor 32 may weight the answers based upon importance by determining the maximum number of points that are available to be assigned to each question 200, 300, 400. For exampl.e, a total of 100 points may be assigned for all of the questions. If there are 27 questions, then a base point value of 3.7 points would be available for each question.

In order to determine the actual maximum points that are available to be assigned to each quest.ion, the relative importance of the questions is determined. In this regard, the importance of each question is determined by averaging the importance ratings of each question among the customers (among the answer sets). The average among all of the questions may be determined by averaging the determined importance of each question among all of the questions. The maximum points available for each question may then be determined by multiplying the base points (3.7) by the dividend of the average importance of each question divided by the average importance among all the questions.

As an example, if question 1b were given importance ratings 3 and 5 by two customers, then the importance average of question 1b would be 4. If the average importance among all of the 27 questions were 3.5, then the available maximum points for question 1 would be 3.7(4/3.5) or 4.23 points.

In order to form the evaluation of the contact center 100, the satisfaction rating is used in conjunction with the maximum available points of each question within a point processor 36 to assign a final point score to each question. The final point score of each question may then be summed among the questions in an adder 34 to form a final score for objectively grading the contact center.

In order to determine a final point score for each question, the consumer satisfaction ratings for each question are averaged among customers answering that question. The average is then divided by the highest possible rating for that question and the dividend is then multiplied by the available maximum points for that question.

As an example, if the available maximum points (as determined above for question 1b were 4.23) and the average satisfaction ratings for question 1a were 4 on a 5 point rating scale, then the final point score for question 1 would be 4.23 (4/5) or 3.38 points. The final point scores for the 27 questions may then be added to provide a final grade for the performance of the contact center.

It should be noted that the 27 questions 200, 300, 400 are generally based upon use of a voice channel. The use of e-mail and chat would use a similar set of questions. For example, question 2a would be changed to "communicates clearly" to reflect the differences in communication channels.

In general, the overall grade given to the contact center 100 would be based upon the last contact with the contact center. In order to accommodate the different communication channels, a final grade may be formed for each type of communication channel. The final grade may then be multiplied by the fraction of customers reporting for that channel and the result added to provide a grade that reflects the overall performance of the contact center.

In general, the questions 200, 300, 400 are based upon a 100 point scale. As such, letter grades can be assigned on that basis (e.g., a grade of A is between 93 and 100, A-is 90-92, B+ is 88-89, B is 83-87, B- is 80-82, C+ is 78-79, C is 73-77, C- is 70-72, D+ is 68-69, D is 63-67, D- is 60-62 and F is <60).

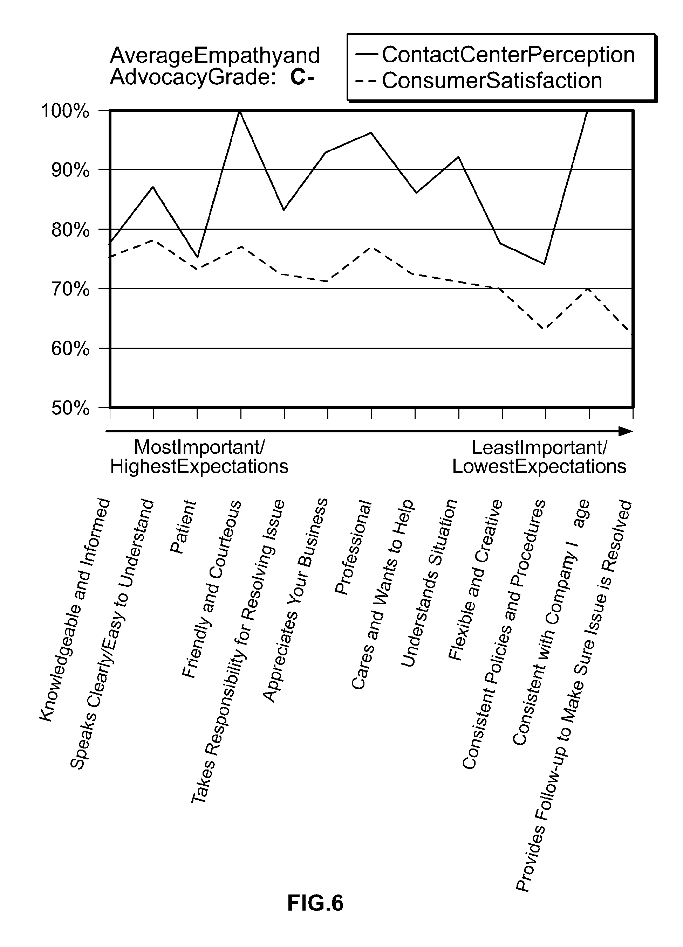

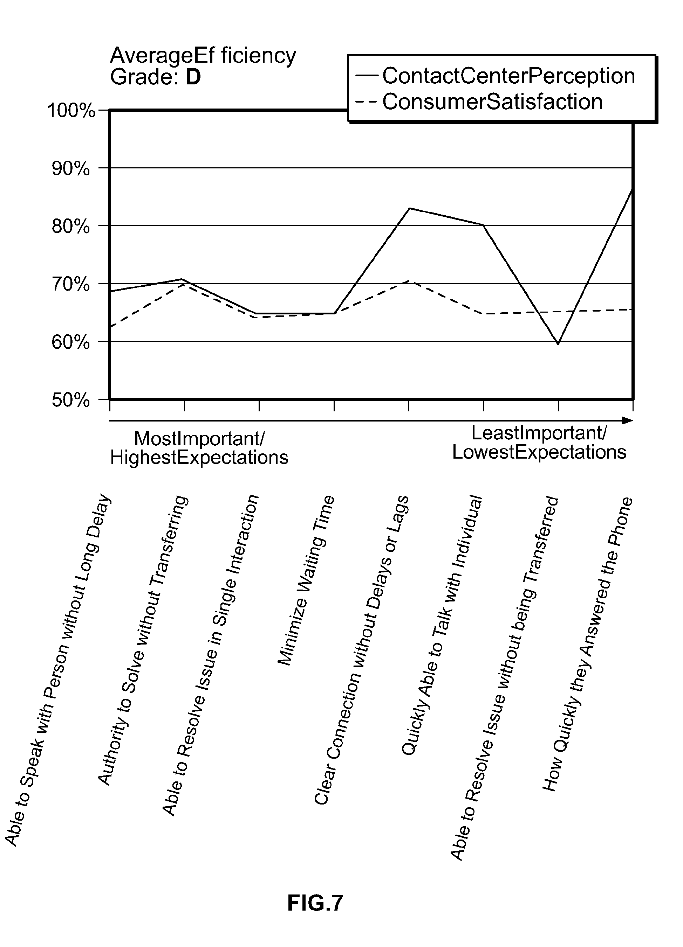

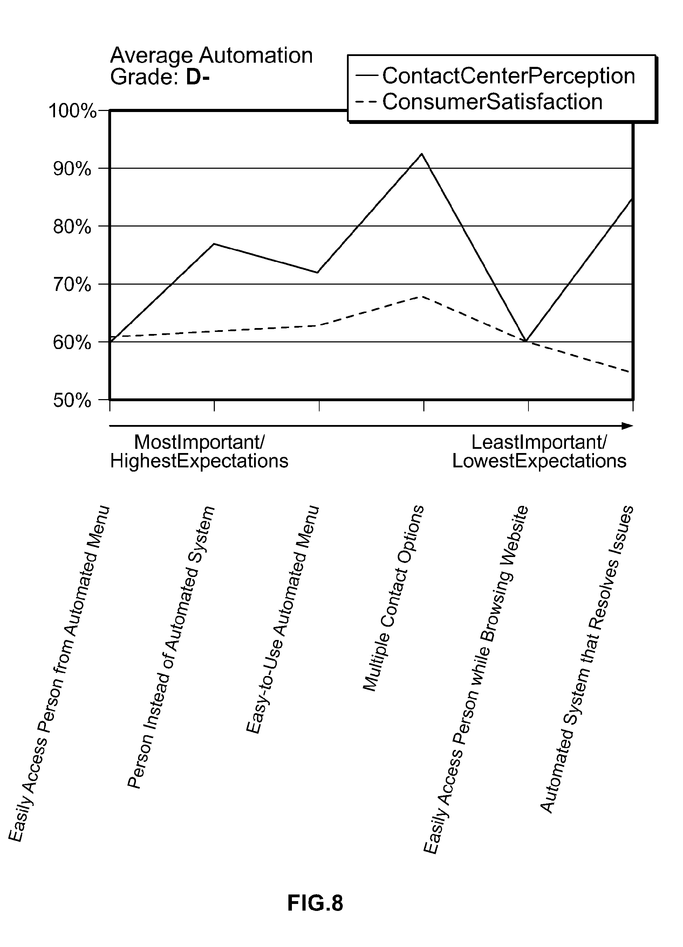

In order to test the reliability of the grading system 10, a group of consumers and a group of contact center personnel were asked to grade a contact center. FIG. 6-8 shows the results of the grading. FIG. 6 shows the grading with respect to empathy and advocacy, FIG. 7 shows the grading with respect to efficiency and FIG. 8 shows the grading with respect to automation. As may be noted, the contact center personnel in each case rated their performance much higher than the consumers rated their performance.

In general, FIGs. 6-8 demonstrate the difficulty in improving contact center performance. With regard to empathy and advocacy, the grading of patience was the only question in which contact center personnel and consumers agreed. In all other cases, the contact center personnel thought they were doing a much better job than the consumers did.

With regard to efficiency, contact center personnel and consumers agreed in the areas of: 1) "Authority to solve without transferring"; 2) "Able to resolve issue in single interaction" and 3) "Minimize wait time". In the category of "Able to resolve issue without being transferred", consumers graded the contact center higher than the contact center personnel. In all other cases, contact center personnel graded themselves higher than consumers.

With regard to automation, contact center personnel and consumers agreed in the areas of "Easily access person from automated menu" and "Easily access person while browsing website". In all other areas, contact center personnel graded themselves higher than consumers.

Previous consumer rating systems have failed because they didn't consider the effect of consumer importance of different satisfaction categories. The present system incorporates those differences in importance by adjusting the available points for each satisfaction category based upon the importance associated with those categories.

In general, the method described herein of objectively grading a call center is different than previous marketing surveys because it focuses exclusively upon the call center and service provided through the call center. Also, unlike previously used marketing surveys, the grading of the call center is based upon the effectiveness of the call center rather than the product sold through the call center.

A specific embodiment of method and apparatus for evaluating contact centers has been described for the purpose of illustrating the manner in which the invention is made and used. It should be understood that the implementation of other variations and modifications of the invention and its various aspects will be apparent to one skilled in the art, and that the invention is not limited by the specific embodiments described. Therefore, it is contemplated to cover the present invention and any and all modifications, variations, or equivalents that fall within the true spirit and scope of the basic underlying principles disclosed and claimed herein.

## Claims

1. A method of objectively grading a performance of a contact center based upon input from a plurality of customers of the contact center, such method comprisi.ng:
receiving a consumer importance rating and a consumer satisfaction rating on the performance of the contact center from at least some customers of the plurality of customers of the contact center for each entry within a set of categories including empathy and advocacy, efficiency and automation;
determining a maximum point score for each entry of the set of categories based upon a relative value of the importance ratings provided by the plurality of customers; and
assigning a point score to each entry of the set of categories based upon the maximum point score for the entry and the satisfaction ratings of the plurality of customers for the category.

2. The method of grading the contact center as in claim 1 further comprising summing the point score assigned to each entry of the set of categories to provide an overall contact center grade.

3. The method of grading the contact center as in claim 1 wherein the step of determining the maximum point score for each entry of the set of categories further comprises averaging the importance ratings from the plurality of customers among the entries of the set of categories.

4. The method of grading the contact center as in claim 3 further comprising dividing an average of the importance rating from the plurality of customers for each entry of the set of categories by the average importance rating among the set of categories and multiplying the dividend by a predetermined base point score for the set of categories.

5. The method of grading the contact center as in claim 1 wherein the step of assigning a point score to each entry further comprises averaging a satisfaction rating among the plurality of customers for each entry, dividing the average by a predetermined highest relative satisfaction rating for the entry and multiplying the dividend by the maximum point score for the entry.

6. The method of objectively grading the contact center as in claim 1 further comprising providing a contact center grade for each of a plurality of contact channels.

7. The method of objectively grading the contact center as in claim 6 further comprising grading the contact center based upon a most recently used contact channel of the plurality of contact channels.

8. The method of objectively grading the contact center as in claim 6 further comprising defining a telephone as one of the plurality of contact channels.

9. The method of objectively grading the contact center as in claim 6 further comprising defining an e-mail as one of the plurality of contact channels.

10. The method of objectively grading the contact center as in claim 6 further comprising defining on-line chat as one of the plurality of contact channels.

11. The method of objectively grading the contact center as in claim 1 wherein the category of empathy and advocacy further comprises a subset of categories where the subset is selected from the group consisting of whether a contact center agent is knowledgeable and informed, speaks clearly/easy to understand, is patient, friendly and courteous, takes responsibility for resolving issues, appreciates your business, is professional, cares and wants to help, understands the situation, is flexible and creative, uses consistent policies and procedures, presents an image that is consistent with a company image and provides follow up to make sure an issue is resolved.

12. The method of objectively grading the contact center as in claim 1 wherein the category of efficiency further comprises a subset of categories where the subset is selected from the group consisting of whether a customer is able to speak with an agent without long delays, whether an agent has authority to solve problems without transferring to another agent, whether an agent is able to resolve an issue in a single interaction, whether the contact center is able to minimize wait time, whether the contact center is able to establish a clear connection without delays or lags, whether a customer is able to quickly talk with an agent, whether an agent is able to resolve an issue without transfer, and how quickly the contact center answered a contact.

13. The method of objectively grading the contact center as in claim 1 wherein the category of automation further comprises a subset of categories where the subset is selected from the group consisting of whether a customer has easy access to an agent from an automated menu, whether a first contact is with an agent instead of an automated system, whether an easy-to-use automated menu is presented, whether a number of contact options are presented, whether a customer can easily access an agent while browsing an website of the contact center and whether an automated system is provided that resolves issues.

14. An apparatus for objectively grading a performance of a contact center based upon input from a plurality of customers of the contact center, such apparatus comprising:
means for receiving a consumer importance rating and a consumer satisfaction rating on the performance of the contact center from at least some customers of the plurality of customers of the contact center for each entry within a set of categories including empathy and advocacy, efficiency and automation;
means for determining a maximum point score for each entry of the set of categories based upon a relative value of the importance ratings provided by the plurality of customers; and
means for assigning a point score to each entry of the set of categories based upon the maximum point score for the entry and the satisfaction ratings of the plurality of customers for the category.

15. The apparatus for grading the contact center as in claim 14 further comprising means for summing the point score assigned to each entry of the set of categories to provide an overall contact center grade.

16. The apparatus for grading the contact center as in claim 14 wherein the means for determining the maximum point score for each entry of the set of categories further comprises means for averaging the importance ratings from the plurality of customers among the entries of the set of categories.

17. The apparatus for grading the contact center as in claim 16 further comprising means for di.vi.ding an average of the importance rating from the plurality of customers for each entry of the set of categories by the average importance rating among the set of categories and multiplying the dividend by a predetermined base point score for the set of categories.

18. The apparatus for grading the contact center as in claim 14 wherein the means for assigning a point score to each entry further comprises means for averaging a satisfaction rating among the plurality of customers for each entry, dividing the average by a predetermined highest relative satisfaction rating for the entry and multiplying the dividend by the maximum point score for the entry.

19. The apparatus for objectively grading the contact center as in claim 14 further comprising means for providing a contact center grade for each of a plurality of contact channels.

20. The apparatus for objectively grading the contact center as in claim 19 further comprising means for grading the contact center based upon a most recently used contact channel of the plurality of contact channels.

21. The apparatus for objectively grading the contact center as in claim 19 further comprising defining a telephone as one of the plurality of contact channels.

22. The apparatus for objectively grading the contact center as in claim 19 further comprising defining an e-mail as one of the plurality of contact channels.

23. The apparatus for objectively grading the contact center as in claim 19 further comprising defining on-line chat as one of the plurality of contact channels.

24. The apparatus for objectively grading the contact center as in claim 14 wherein the category of empathy and advocacy further comprises a subset of categories where the subset is selected from the group consisting of whether a contact center agent is knowledgeable and informed, speaks clearly/easy to understand, is patient, friendly and courteous, takes responsibility for resolving issues, appreciates your business, is professional, cares and wants to help, understands the situation, is flexible and creative, uses consistent policies and procedures, presents an image that is consistent with a company image and provides follow up to make sure an issue is resolved.

25. The apparatus for objectively grading the contact center as in claim 14 wherein the category of efficiency further comprises a subset of categories where the subset is selected from the group consisting of whether a customer is able to speak with an agent without long delays, whether an agent has authority to solve problems without transferring to another agent, whether an agent is able to resolve an issue in a single interaction, whether the contact center is able to minimize wait time, whether the contact center is able to establish a clear connection without delays or lags, whether a customer is able to quickly talk with an agent, whether an agent is able to resolve an issue without transfer, and how quickly the contact center answered a contact.

26. The apparatus for objectively grading the contact center as in claim 14 wherein the category of automation further comprises a subset of categories where the subset is selected from the group consisting of whether a customer has easy access to an agent from an automated menu, whether a first contact is with an agent instead of an automated system, whether an easy-to-use automated menu is presented, whether a number of contact options are presented, whether a customer can easily access an agent while browsing an website of the contact center and whether an automated system is provided that resolves issues.

27. An apparatus for objectively grading a performance of a contact center based upon input from a plurality of customers of the contact center, such apparatus comprising:
a memory adapted to receive a consumer importance rating and a consumer satisfaction rating on the performance of the contact center from at least some customers of the plurality of customers of the contact center for each entry within a set of categories including empathy and advocacy, efficiency and automation;
a weighting process that determines a maximum point score for each entry of the set of categories based upon a relative value of the importance ratings provided by the plurality of customers by averaging the importance ratings from the plurality of customers among the entries of the set of categories and dividing an average of the importance rating from the plurality of customers for each entry of the set of categories by the average importance rating among the set of categories and multiplying the dividend by a predetermined base point score for the set of categories; and
a point processor that assigns a point score to each entry of the set of categories based upon the maximum point score for the entry and the satisfaction ratings of the plurality of customers for the category by averaging a satisfaction rating among the plurality of customers for each entry, dividing the average by a predetermined highest relative satisfaction rating for the entry and multiplying the dividend by the maximum point score for the entry.

28. The apparatus for grading the contact center as in claim 27 further comprising a summer that sums the point score assigned to each entry of the set of categories to provide an overall contact center grade.

29. The apparatus for objectively grading the contact center as in claim 27 wherein the category of empathy and advocacy further comprises a subset of categories where the subset is selected from the group consisting of whether a contact center agent is knowledgeable and informed, speaks clearly/easy to understand, is patient, friendly and courteous, takes responsibility for resolving issues, appreciates your business, is professional, cares and wants to help, understands the situation, is flexible and creative, uses consistent policies and procedures, presents an image that is consistent with a company image and provides follow up to make sure an issue is resolved.

30. The apparatus for objectively grading the contact center as in claim 27 wherein the category of efficiency further comprises a subset of categories where the subset is selected from the group consisting of whether a customer is able to speak with an agent without long delays, whether an agent has authority to solve problems without transferring to another agent, whether an agent is able to resolve an issue in a single interaction, whether the contact center is able to minimize wait time, whether the contact center is able to establish a clear connection without delays or lags, whether a customer is able to quickly talk with an agent, whether an agent is able to resolve an issue without transfer, and how quickly the contact center answered a contact.

31. The apparatus for objectively grading the contact center as in claim 27 wherein the category of automation further comprises a subset of categories where the subset is selected from the group consisting of whether a customer has easy access to an agent from an automated menu, whether a first contact is with an agent instead of an automated system, whether an easy-to-use automated menu is presented, whether a number of contact options are presented, whether a customer can easily access an agent while browsing an website of the contact center and whether an automated system is provided that resolves issues.

32. A method of objectively grading a performance of a contact center based upon input from a plurality of customers of the contact center, such method comprising:
receiving a rating on the performance of contact center from each customer of the plurality of customers for each entry within a set of categories including empathy and advocacy, efficiency and automation;
receiving a relative importance rating from each customer of the plurality of customers for each entry of the set of categories;
weighting each entry of the set of categories based upon a relative importance of the entry among the plurality of customers; and
grading the contact center based upon the ratings and the weightings of each entry of the set of categories.
